# EUROPÄISCHE PATENTSCHRIFT

(11) **EP 3 606 806 B1**
(45) Veröffentlichungstag und Bekanntmachung des Hinweises auf die Patenterteilung: **30.06.2021**
(21) Anmeldenummer: 18715536.1
(22) Anmeldetag: 21.03.2018
(51) Int. Cl.: B62D 35/00

(54) **HECKSPOILEREINRICHTUNG FÜR EIN NUTZFAHRZEUG**
REAR SPOLIER FOR A VEHICLE
SPOILER ARRIÈRE POUR UN VÉHICULE

(30) Priorität: 01.04.2017 DE 102017003191
(43) Veröffentlichungstag der Anmeldung: 12.02.2020
(73) Patentinhaber: ZF CV Systems Europe BV, 1170 Brussels (BE)
(72) Erfinder: DIECKMANN, Thomas, 30982 Pattensen (DE); GENCASLAN, Umut, 30167 Hannover (DE); SCHÜNEMANN, Gerd, 30880 Laatzen (DE); VAN RAEMDONCK, Gandert Marcel Rita, 2611 PW Delft (NL); VELDHUIZEN, Roy, 3023 HH Rotterdam (NL)
(74) Vertreter: Rabe, Dirk-Heinrich
(86) Internationale Anmeldenummer: PCT/EP2018/057169
(87) Internationale Veröffentlichungsnummer: WO 2018/177841

(56) Entgegenhaltungen:
- WO-A1-2014/210360
- US-A1- 2009 200 834
- US-A1- 2011 084 516

## Beschreibung

Die Erfindung betrifft eine Heckspoilereinrichtung für ein Nutzfahrzeug und ein derartiges Nutzfahrzeug.

Das Fahrzeug weist hierbei zwei Hecktüren auf, die jeweils nach hinten und außen aufschwingbar sind, wobei sie insbesondere von einer geschlossenen Stellung aus um mehr als 180°, z. B. etwa 250° oder 270°, nach vorne schwenkbar sind, um sie an die Seitenwände eines kastenförmigen Aufbaus des Nutzfahrzeugs anzulegen und ggf. zu arretieren.

Derartige Heckspoilereinrichtungen sind insbesondere an Nutzfahrzeugen mit stumpfem Heck bzw. im Wesentlichen kastenförmigen Aufbau vorgesehen; hierbei ermöglicht die Heckspoilereinrichtung mit den ausgefahrenen Dach-Luftleitelementen eine aerodynamische Konturverlängerung nach hinten, um die Abrisswirbel an der stumpfen Abrisskante zumindest zu verringern. Eine derartige Heckspoilereinrichtung weist im Allgemeinen Dach-Luftleitelemente auf, die z. B. an der Hecktüre anbringbar sind und zwischen einer eingefalteten Grundstellung, in der sie flach an der Hecktüre anliegen, und einer ausgefalteten Fahrstellung verstellbar sind.

Die US 2004/0119319 A1 zeigt ein Fahrzeug mit einer derartigen Heckspoilereinrichtung. Die Dach-Luftleitelemente verlängern die Dachfläche des Fahrzeugs nach hinten und können nach innen eingefaltet werden. Die Heckspoilereinrichtung kann im eingefahrenen Zustand mit den Hecktüren wegschwenken und den Laderaum freigeben.

Die US 2007/0126261 A1 zeigt eine weitere Heckspoilereinrichtung, die an den Seitenwänden des Fahrzeugs angebracht wird, und eine Faltung in Fahrzeug-Längsrichtung ermöglicht, wobei eine derartige Heckspoilereinrichtung die gesamte Heckfläche des Fahrzeugs ausfüllt.

Derartige Heckspoilereinrichtungen sind jedoch oftmals aufwändig zu montieren und ermöglichen keinen einfachen Zugang zu den Hecktüren des Nutzfahrzeugs.

Weitere schwenkbare oder verstellbare Anordnungen von Luftleitelementen sind auch z. B. in der DE 10 2009 014 860 A1, DE 20 2009 014 476 U1, DE 102 286 58 A1, US 2011/084516 A1 und WO 2014/210360 A1 gezeigt.

Die Verstellung der beiden Dach-Luftleitelemente ist jedoch relativ aufwändig. Der Benutzer muss im Allgemeinen beide Dach-Luftleitelemente durch Verstelleinrichtungen wie z. B. Zug-Druck-Streben verstellen, um die Heckspoilereinrichtung in die Fahrstellung zu verstellen. Entsprechend sind bei pneumatischen oder elektrischen Systemen zwei Verstelleinrichtungen für die beiden Dach-Luftleitelemente vorzusehen.

Die US 2009/200834 A1 offenbart eine Heckspoilereinrichtung für ein Fahrzeug mit einem oberen Luftleitelement, Seiten-Luftleitelementen und einem unteren Luftleitelement. Das obere Luftleitelement, die Seiten-Luftleitelemente und das untere Luftleitelement liegen in einem Ruhezustand gegen ein Heck des Fahrzeugs an. Das obere Luftleitelement kann automatisch in einen ausgeklappten Zustand verschwenkt werden, wenn ein Luftstrom das Fahrzeug umströmt. Dabei kann das obere Luftleitelement die Seiten-Luftleitelemente nach außen ziehen, die wiederum das untere Luftleitelement nach außen ziehen.

Der Erfindung liegt daher die Aufgabe zugrunde, eine Heckspoilereinrichtung für ein Nutzfahrzeug zu schaffen, die mit relativ geringem Aufwand ausbildbar ist und eine sichere Verstellung ermöglicht.

Diese Aufgabe wird durch eine Heckspoilereinrichtung nach Anspruch 1 gelöst. Die Unteransprüche beschreiben bevorzugte Weiterbildungen. Weiterhin ist ein Nutzfahrzeug mit einer derartigen Heckspoilereinrichtung vorgesehen.

Der Erfindung liegt die Erkenntnis zugrunde, dass die beiden Dach-Luftleitelemente jeweils eine Klappbewegung bzw. Schwenkbewegung vollziehen, die grundsätzlich auch miteinander kombiniert werden kann. Somit ist eine Kopplungseinrichtung vorgesehen, die eine Kopplung der Schwenkbewegung bzw. Klappbewegung der Dach-Luftleitelemente ermöglicht. Hierbei ist die Kopplungseinrichtung an einem ersten Dach-Luftleitelement, z. B. dem linken Dach-Luftleitelement vorgesehen, und koppelt bzw. nimmt das andere, zweite Dach-Luftleitelement bei der Schwenkbewegung des ersten Dach-Luftleitelementes mit.

Somit muss der Benutzer lediglich das erste Dach-Luftleitelement aktiv von der Grundstellung in die Fahrstellung verstellen, wodurch das zweite Dach-Luftleitelement aufgrund der Kopplungseinrichtung mitverschwenkt wird.

Die Kopplung erfolgt durch einen Überlapp zwischen den Dach-Luftleitelementen, bei denen das aktiv verstellte erste Dach-Luftleitelement unter eine innere Kante des zweiten Dach-Luftleitelementes ragt. Hierbei ragt die Kopplungseinrichtung des ersten Dach-Luftleitelementes unter das zweite Dach-Luftleitelement; und weiterhin kann auch an dem zweiten Dach-Luftleitelement eine Gegen-Kopplungseinrichtung vorgesehen sein, die mit der (ersten) Kopplungseinrichtung zusammenwirkt.

Die Kopplungseinrichtung und auch die Gegen-Kopplungseinrichtung können insbesondere auch als Kunststoff-Winkel oder -Profile oder als MetallWinkel oder -Profile, z. B. mit der Formgebung als U-förmige oder S-förmige Profile ausgebildet werden, die somit nachträglich an Dach- Luftleitelementen befestigt werden können und einen sicheren Eingriff ermöglichen, z. B. durch Winkel- oder Profilbereiche.

Die Kopplung der Dach-Luftleitelemente beeinträchtigt nicht die reguläre Nutzung der Hecktüren. Der Benutzer kann in üblicher Weise bei eingefahrener Heckspoilereinrichtung, d. h. bei auf den Hecktüren aufliegenden Dachluftleitelementen, die Hecktüren öffnen. Hierbei kann der Benutzer insbesondere in üblicher Weise zuerst die rechte Hecktüre mit dem zweiten Dach-Luftleitelement öffnen, und die geöffnete Hecktüre auch in üblicher Weise nach außen und vorne schwenken zur Anlage an der Seitenwand. Die Kopplungseinrichtung und Gegen-Kopplungseinrichtung heben hierbei problemlos in der Grundstellung voneinander ab, so dass hier keine Beeinträchtigung vorliegt. Insbesondere bei Profileingriffen oder Winkeleingriffen liegt vorzugsweise eine nicht verrastende Auflage vor, so dass die rechte Hecktüre mit dem zweiten Dach-Luftleitelement problemlos von dem ersten Dach-Luftleitelement abheben kann.

Nach dem Öffnen der ersten Hecktüre kann der Benutzer nachfolgend die zweite Hecktüre mit dem ersten Dachluftleitelement öffnen und auch nach außen oder nach außen und vorne zur Anlage an der Seitenwand schwenken.

Zur Verstellung muss der Benutzer somit lediglich die eine Verstelleinrichtung zum aktiven Verschwenken des ersten Dach-Luftleitelementes von der Grundstellung in die Fahrstellung betätigen, wodurch das zweite Dach-Luftleitelement mitgenommen wird und ebenfalls in die Fahrstellung geschwenkt wird. Beim Rückstellvorgang stellt der Benutzer entsprechend das erste Dach-Luftleitelement zurück, was im Allgemeinen durch die Schwerkraft von alleine nach unten schwenkt; das zweite Dach-Luftleitelement kann ebenfalls alleine aufgrund seiner Schwerkraft, wenn es nicht mehr von dem ersten Dach-Luftleitelement getragen wird, nach unten in die Grundstellung schwenken.

Somit wird eine einfache und kostengünstige Ausbildung, insbesondere der Kopplungseinrichtung und ggf. der Gegen-Kopplungseinrichtung ermöglicht, die eine sichere Verstellung mit geringem Aufwand, nämlich lediglich einer einzigen Verstelleinrichtung, gewährleistes, wobei der weitere Zugang zum Laderaum über die Hecktüren und das Verstellen der Hecktüren hierdurch nicht beeinträchtigt wird.

Die Erfindung wird im Folgenden anhand der beiliegenden Zeichnungen an einigen Ausführungsformen näher erläutert. Es zeigen:
- Fig. 1: eine perspektivische Rückansicht eines Nutzfahrzeugs mit einer Heckspoilereinrichtung gemäß einer Ausführungsform der Erfindung in Fahrstellung;
- Fig. 2: eine weitere perspektivische Ansicht der Heckspoilereinrichtung am Nutzfahrzeug;
- Fig. 3: die Kopplung der Dach-Luftleitelemente gemäß einer Ausführungsform der Erfindung.

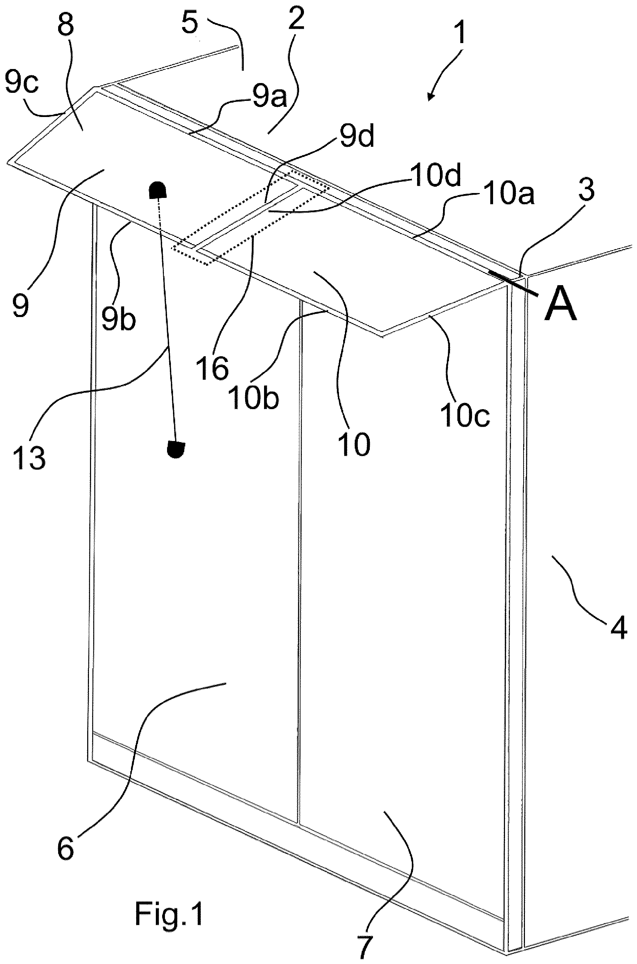

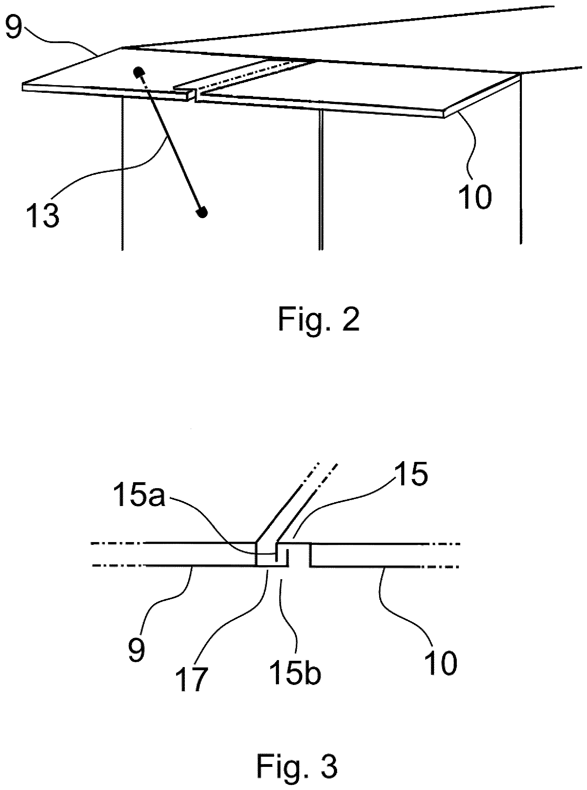

Von einem Nutzfahrzeug 1 ist in Fig. 1 und 2 das Heck 2 gezeigt. Das Nutzfahrzeug 1 weist hierbei ein stumpfes Ende bzw. ein stumpfes Heck auf und ist z. B. als kastenförmiger LKW ausgebildet. Das Nutzfahrzeug 1 weist eine Fahrzeug-Struktur 3 auf, die am Heck 2 z. B. ein Portal bildet, weiterhin zwei Seitenwände 4, von denen in den perspektivischen Darstellungen die in Fahrtrichtung rechte Seitenwand 4 zu erkennen ist, sowie eine Dachfläche 5.

An dem Heck 2 ist eine Heckspoilereinrichtung 8 vorgesehen, die ein erstes, linkes Dach-Luftleitelement 9 und ein zweites, rechtes Dach-Luftleitelement 10 aufweist. Die Dach-Luftleitelemente 9, 10 sind z. B. aus einem Kunststoffmaterial ausgebildet und können wie in den Figuren gezeigt plan oder auch etwas gekrümmt ausgebildet sein. Sie sind zwischen einer Grundstellung, in der sie an den Hecktüren 6, 7 anliegen, und einer Fahrstellung ausschwenkbar oder ausklappbar. In der in Fig. 1, 2 gezeigten Fahrstellung dienen sie zur aerodynamischen Konturverlängerung der Dachfläche 5 nach hinten und sind etwas gegenüber der Horizontalen nach unten geneigt. Ergänzend können am Nutzfahrzeug 1 auch Seiten-Luftleitelemente vorgesehen sein, die hier in den Figuren nicht gezeigt sind. Das linke Dach-Luftleitelement 9 und das rechte Dach-Luftleitelement 10 sind z. B. jeweils in einer Scharniereinrichtung an ihrer jeweiligen Hecktüre 6, 7 angebracht, so dass sie in einer Schwenkachse A zwischen der Fahrstellung und Grundstellung schwenkbar sind.

Somit weisen die Dach-Luftleitelemente 9 und 10 jeweils eine vordere Kante 9a, 10a auf, die an oder im Bereich der Dachfläche 5 liegt, weiterhin ein hinteres Ende 9b, 10b, das in der gezeigten Fahrstellung nach hinten und unten weist. Hierbei wird die hintere Kante 9b, 10b vorzugsweise eine kürzere Breite als die vordere Kante 9a, 10a aufweisen, um die gewünschten aerodynamischen Eigenschaften zu erfüllen. Als Verstelleinrichtung 13 ist gemäß Fig. 1 eine Zug-Druck-Strebe vorgesehen, die zum Verstellen des linken Dach-Luftleitelementes 9 dient und z. B. in der Fahrstellung an der linken Fahrzeugtüre 6 arretiert werden kann. Neben derartigen mechanischen bzw. händischen Verstellungen sind weiterhin auch z. B. pneumatische oder elektrische Verstelleinrichtungen möglich.

Zwischen den Dach-Luftleitelementen 9, 10 ist eine Kopplungseinrichtung 15 vorgesehen, die zur Kopplung der Schwenkbewegung bzw. Klappbewegung der Dach-Luftleitelemente 9, 10 dient. Hier ist die Kopplungseinrichtung 15 derartig ausgebildet, dass das linke Dach-Luftleitelement 9 vom Benutzer über die Verstelleinrichtung 13 verstellbar ist und beim Verstellen nach oben in die Fahrstellung das rechte Dach-Luftleitelement 10 mitnimmt. Somit ist keine eigene Verstellvorrichtung für das rechte Dach- Luftleitelement 10 vorgesehen; die Verstellung in die Fahrstellung erfolgt durch die Kopplungseinrichtung, d. h. durch Mitnahme des verstellten linken Dach-Luftleitelementes 9. Die Rückverstellung erfolgt selbsttätig aufgrund der Gravitation, d. h. beim Zurückschwenken des linken Dach-Luftleitelementes 9 bzw. beim Herunterlassen mittels der Verstelleinrichtung 13 fällt das rechte Dach-Luftleitelement 10 selbsttätig nach unten.

Die Kopplungseinrichtung 15 ist hierbei vorzugsweise als Verlängerung des linken Dach-Luftleitelementes 9 über die Mitte hinaus, d. h. nach rechts vorgesehen. Somit erstreckt sich die Kopplungseinrichtung 15 über die mittlere Symmetrielinie bzw. die Öffnungslinie der Hecktüren hinaus und liegt unterhalb eines inneren Randes des rechten Dach-Luftleitelementes 10 (innerer seitliche Kante 10d). Hierbei kann die Kopplungseinrichtung 15 bereits als festes Teil des linken Dach-Luftleitelementes 9 vorgesehen sein, d. h. z. B. als Kunststoff-Verlängerung, oder als zusätzliches, nachträglich an dem linken Dach-Luftleitelement 9 angebrachtes Profil.

Gemäß der Ausführungsform der Fig. 3 kann auch an dem passiven, d. h. rechten Dach-Luftleitelement 10 eine Gegen-Kopplungseinrichtung 17 vorgesehen sein, z. B. als Gegen-Profil, zum Eingriff in bzw. Eingriff mit der Kopplungseinrichtung 15. Gemäß Fig. 3 können die Kopplungseinrichtung 15 und die Gegen-Kopplungseinrichtung 17 z. B. jeweils als Winkel oder U-Profile, weiterhin z. B. auch als S-förmige Profile ausgebildet sein, die jeweils ineinander ragen oder ineinander greifen. Hierdurch wird eine hohe Steifigkeit der Kopplungseinrichtung 15 und Gegen- Kopplungseinrichtung 17 ermöglicht, und insbesondere auch ein Umklappen oder Nachgeben der Kopplungseinrichtung 15 verhindert. Die Kopplungseinrichtung 15 und Gegen-Kopplungseinrichtung 17 können somit z. B. als Kunststoff-Winkel, Kunststoff-Leisten oder U-förmige oder S-förmige Kunststoffprofile ausgebildet und nachträglich an den Dach-Luftleitelementen 9, 10 angebracht werden, z. B. durch Nieten, Schrauben oder Kleben. Hierdurch wird auch ein direkter und einfacher Eingriff der beiden Dach-Luftleitelemente ineinander, ohne z. B. Haken oder Arretierungen, und somit auch eine leichte Rückstellbewegung zurück in die Fahrstellung ermöglicht.

In der Grundstellung der Dach-Luftleitelemente 9, 10 kann in üblicher Weise zunächst die rechte Hecktüre 7 geöffnet werden; hierbei hebt die Gegen-Kopplungseinrichtung 17 aus der Kopplungseinrichtung 15 ab, ohne dass dies zu einer Verzögerung oder Beschädigung führt. Nachfolgend können die Hecktüren 7, 6 jeweils nach hinten aufgeschwenkt und z. B. auch um etwa 270° nach außen und vorne, zur Anlage an den Seitenwänden 4 geschwenkt werden, wobei die Hecktüren 6, 7 an der Seitenwand 4 befestigt werden können und hierbei das eingefaltete Dach-Luftleitelement 9, 10 jeweils zwischen den Hecktüre 6, 7 und den Seitenwänden 4 aufgenommen werden.

Die erfindungsgemäße Ausbildung der Dach-Luftleitelemente mit der Kopplungseinrichtung 15 und Gegen-Kopplungseinrichtung 17 erfordert somit in der Herstellung nur einen geringen Aufwand; es beeinträchtigt die Handhabung der Hecktüren nicht und vereinfacht den Aufstellvorgang.

### Bezugszeichenliste (Teil der Beschreibung)

- 1: Nutzfahrzeug
- 2: Heck
- 3: Fahrzeug-Struktur
- 4: Seitenwand
- 5: Dachfläche
- 6: erste Hecktüre
- 7: zweite Hecktüre
- 8: Heckspoilereinrichtung
- 9: erstes Dach-Luftleitelement, z. B. linkes Dach-Luftleitelement
- 9a: vordere Kante
- 9b: hintere Kante
- 9c: äußere seitliche Kante
- 9d: innere seitliche Kante
- 10: zweites Dach-Luftleitelement, z. B. rechtes Dach-Luftleitelement
- 10a: vordere Kante
- 10b: hintere Kante
- 10c: äußere seitliche Kante
- 10d: innere seitliche Kante
- 13: Verstelleinrichtung, z. B. Zug-Druck-Strebe
- 15: Kopplungseinrichtung
- 15a: Profil, zum Beispiel U-Profil
- 15b: Spalt
- 16: innerer Bereich
- 17: Gegen-Kopplungseinrichtung
- A: Schwenkachse

## Patentansprüche

1. Heckspoilereinrichtung (8) für ein Nutzfahrzeug (1), wobei die Heckspoilereinrichtung (8) aufweist:
ein erstes Dach-Luftleitelement (9) zur Anbringung an einer ersten Hecktüre (6), ein zweites Dach-Luftleitelement (10) zur Anbringung an einer zweiten Hecktüre (7),
wobei die beiden Dach-Luftleitelemente (9, 10) zwischen einer eingeklappten Grundstellung und einer Fahrstellung zur aerodynamischen Konturverlängerung einer Dachfläche (5) verstellbar sind,
eine Verstelleinrichtung (13) zur Verstellung des ersten Dach-Luftleitelementes (9) zwischen der Grundstellung und Fahrstellung,
**dadurch gekennzeichnet, dass**
eine Kopplungseinrichtung (15) zur Kopplung der Schwenkbewegungen der Dach-Luftleitelemente (9, 10) vorgesehen ist, wobei die Kopplungseinrichtung (15) an dem ersten Dach-Luftleitelement (9) vorgesehen ist und unter das zweite Dach-Luftleitelement (10) ragt.

2. Heckspoilereinrichtung (8) nach Anspruch 1,
**dadurch gekennzeichnet, dass**
das zweite Dach-Luftleitelement (10) durch das erste Dach-Luftleitelement (9) beim Verstellen von der Grundstellung in die Fahrstellung mitnehmbar ist.

3. Heckspoilereinrichtung (8) nach einem der vorherigen Ansprüche,
**dadurch gekennzeichnet, dass**
die Kopplungseinrichtung (15) unter einen inneren Bereich (16) des zweiten Dach-Luftleitelementes (10) ragt.

4. Heckspoilereinrichtung (8) nach einem der vorherigen Ansprüche,
**dadurch gekennzeichnet, dass**
das zweite Dach-Luftleitelement (10) ein vorderes Ende (10a) zur Anlage an einer Hecktüre (7) und/oder zur Ausbildung einer Schwenkachse (A), eine hintere Kante (10b), eine äußere seitliche Kante (10c) und eine innere seitliche Kante (10d) aufweist, und
die Kopplungseinrichtung (15) die innere Kante (10d) und/oder einen inneren Bereich des zweiten Dach-Luftleitelementes (10) mitnimmt.

5. Heckspoilereinrichtung (8) nach einem der vorherigen Ansprüche,
**dadurch gekennzeichnet, dass**
die Kopplungseinrichtung (15) das zweite Dach-Luftleitelement (10) entlang der gesamten inneren Kante (10d) des zweiten Dach- Luftleitelementes (10) mitnimmt.

6. Heckspoilereinrichtung (8) nach einem der vorherigen Ansprüche,
**dadurch gekennzeichnet, dass**
an dem zweiten Dach-Luftleitelement (10) eine Gegen-Kopplungseinrichtung (17) zum Eingriff in und Mitnahme durch die Kopplungseinrichtung (15) vorgesehen ist.

7. Heckspoilereinrichtung (8) nach Anspruch 6,
**dadurch gekennzeichnet, dass**
die Kopplungseinrichtung (15) und die Gegen-Kopplungseinrichtung (17) als gewinkelte oder U-förmige Profile ausgebildet sind, die bei Mitnahme ineinandergreifen, vorzugsweise formschlüssig.

8. Heckspoilereinrichtung (8) nach einem der vorherigen Ansprüche,
**dadurch gekennzeichnet, dass**
die Verstelleinrichtung (13) nur zur Verstellung des ersten Dach-Luftleitelementes (9) vorgesehen ist und das zweite Dach-Luftleitelement nur passiv über das erste Dach-Luftleitelement (9) verstellbar ist.

9. Heckspoilereinrichtung nach einem der vorherigen Ansprüche,
**dadurch gekennzeichnet, dass**
das erste Dach-Luftleitelement (9) das linke Dach-Luftleitelement (9) und das zweite Dach-Luftleitelement (10) das rechte Dach-Luftleitelement (10) ist.

10. Heckspoilereinrichtung nach einem der vorherigen Ansprüche,
**dadurch gekennzeichnet, dass**
die Verstelleinrichtung (13) eine mechanische Verstelleinrichtung, z. B. ein Zug-Druck-Stab, oder eine pneumatische oder elektrische Verstelleinrichtung zur Verstellung des ersten Dach-Luftleitelementes (9) ist.

11. Heckspoilereinrichtung (8) nach einem der vorherigen Ansprüche,
**dadurch gekennzeichnet, dass**
sie vollständig an den Hecktüren (6, 7) anbringbar ist,
wobei das erste Dach-Luftleitelement (9) an einer ersten Hecktüre (6) und das zweite Dach-Luftleitelement (10) an einer zweiten Hecktüre (7) des Nutzfahrzeugs (1) anbringbar ist.

12. Heckspoilereinrichtung (8) nach einem der vorherigen Ansprüche,
**dadurch gekennzeichnet, dass**
die Dach-Luftleitelemente (9, 10) in der Grundstellung flach an den Hecktüren (6, 7) anlegbar sind.

13. Heckspoilereinrichtung (8) nach einem der vorherigen Ansprüche,
**dadurch gekennzeichnet, dass**
das erste Dach-Luftleitelement (9) und das zweite Dach-Luftleitelement (10) jeweils eine Scharniereinrichtung zur Anbringung an jeweils einer Hecktüre (6, 7) zur Ausbildung der Schwenkachse (A) aufweisen.

14. Heckspoilereinrichtung nach einem der vorherigen Ansprüche,
**dadurch gekennzeichnet, dass**
die Dach-Luftleitelemente (9, 10) aus einem Kunststoff ausgebildet sind.

15. Nutzfahrzeug (1) mit einer Heckspoilereinrichtung (8) nach einem der vorherigen Ansprüche,
wobei in der Grundstellung die Hecktüren (6, 7) jeweils nacheinander öffenbar und um etwa 270° nach außen und vorne schwenkbar sind, zur Anlage an jeweils einer Seitenwand (4) des Nutzfahrzeugs (1), unter Aufnahme der in der Grundstellung eingefahrenen Heckspoilereinrichtung (8) zwischen den Hecktüren (6, 7) und den Seitenwänden (4).

16. Nutzfahrzeug (1) nach Anspruch 15,
**dadurch gekennzeichnet, dass**
die zweite Hecktüre (7), an der das zweite Dach-Luftleitelement (10) angebracht ist, als erstes öffenbar und die erste Hecktüre (6), an der das erste Dach-Luftleitelement (9) angebracht ist, nachfolgend öffenbar ist.

## Claims

1. A rear spoiler (8) for a utility vehicle (1), wherein the rear spoiler (8) has:
a first roof air-guiding element (9) for attachment to a first rear door (6), a second roof air-guiding element (10) for attachment to a second rear door (7),
wherein the two roof air-guiding elements (9, 10) can be adjusted between a folded-in basic position and a driving position for aerodynamic contour elongation of a roof surface (5),
an adjustment device (13) for the adjustment of the first roof air-guiding element (9) between the basic position and the driving position,
**characterized in that**
a coupling device (15) for coupling the pivoting movements of the roof air-guiding elements (9, 10) is provided, wherein the coupling device (15) is provided on the first roof air-guiding element (9) and protrudes below the second roof air-guiding element (10).

2. The rear spoiler (8) according to claim 1,
**characterized in that**
the second roof air-guiding element (10) can be entrained by the first roof air-guiding element (9) in the adjustment from the basic position to the driving position.

3. The rear spoiler (8) according to any of the preceding claims,
**characterized in that**
the coupling device (15) protrudes under an inner region (16) of the second roof air-guiding element (10).

4. The rear spoiler (8) according to any of the preceding claims,
**characterized in that**
the second roof air-guiding element (10) has a front end (10a) to rest against a rear door (7) and/or for the formation of a pivot axis (A), a rear edge (10b), an outer lateral edge (10c) and an inner lateral edge (10d), and
the coupling device (15) entrains the inner edge (10d) and/or an inner region of the second roof air-guiding element (10) .

5. The rear spoiler (8) according to any of the preceding claims,
**characterized in that**
the coupling device (15) entrains the second roof air-guiding element (10) along the entire inner edge (10d) of the second roof air-guiding element (10).

6. The rear spoiler (8) according to any of the preceding claims,
**characterized in that**
a counter coupling device (17) is provided on the second roof air-guiding element (10) for engagement in and entrainment by the coupling device (15).

7. The rear spoiler (8) according to claim 6,
**characterized in that**
the coupling device (15) and the counter coupling device (17) are configured as angled or U-shaped profiles, which engage in each other when being entrained, preferably in formfitting manner.

8. The rear spoiler (8) according to any of the preceding claims,
**characterized in that**
the adjustment device (13) is only provided for the adjustment of the first roof air-guiding element (9) and the second roof air-guiding element is only passively adjustable via the first roof air-guiding element (9).

9. The rear spoiler according to any of the preceding claims,
**characterized in that**
the first roof air-guiding element (9) is the left roof air-guiding element (9) and the second roof air-guiding element (10) is the right roof air-guiding element (10).

10. The rear spoiler according to any of the preceding claims,
**characterized in that**
the adjustment device (13) is a mechanical adjustment device, e.g., a push-pull rod, or a pneumatic or electrical adjustment device for adjustment of the first roof air-guiding element (9).

11. The rear spoiler (8) according to any of the preceding claims,
**characterized in that**
it is completely attachable to the rear doors (6, 7),
wherein the first roof air-guiding element (9) is attachable to the first rear door (6) and the second roof air-guiding element (10) is attachable to the second rear door (7) of the utility vehicle (1).

12. The rear spoiler (8) according to any of the preceding claims,
**characterized in that**
in the basic position the roof air-guiding elements (9, 10) can lie flat on the rear doors (6, 7).

13. The rear spoiler (8) according to any of the preceding claims,
**characterized in that**
the first roof air-guiding element (9) and the second roof air-guiding element (10) each have a hinge device for attachment to the respective rear doors (6, 7) for configuration of the pivot axis (A).

14. The rear spoiler according to any of the preceding claims,
**characterized in that**
the roof air-guiding element (9, 10) is formed from a plastic.

15. A utility vehicle (1) with a rear spoiler (8) according to any of the preceding claims,
wherein in the basic position the rear doors (6, 7) can each be opened in succession and are pivotable outward and forward by about 270°, to rest against a sidewall (4) of the utility vehicle (1), receiving the rear spoiler (8) inserted into the basic position between the rear doors (6, 7) and the sidewalls (4).

16. The utility vehicle (1) according to claim 15,
**characterized in that**
the second rear door (7), to which the second roof air-guiding element (10) is attached, is openable first and the first rear door (6), to which the first roof air-guiding element (9) is attached, is openable subsequently.

## Revendications

1. Dispositif de becquet arrière (8) pour un véhicule utilitaire (1), dans lequel le dispositif de becquet arrière (8) présente :
un premier élément de déflection d'air de toit (9) à apposer contre une première porte arrière (6), un second élément de déflection d'air de toit (10) à apposer contre une seconde porte arrière (7),
dans lequel les deux éléments de déflection d'air de toit (9, 10) peuvent être réglés entre une position de base repliée et une position de roulage pour une extension de contour aérodynamique d'une surface de toit (5),
un dispositif de réglage (13) pour régler le premier élément de déflection d'air de toit (9) entre la position de base et la position de roulage,
**caractérisé en ce que**
un dispositif de couplage (15) est prévu pour coupler les mouvements de pivotement des éléments de déflection d'air de toit (9, 10), dans lequel le dispositif de couplage (15) est prévu contre le premier élément de déflection d'air de toit (9) et dépasse sous le second élément de déflection d'air de toit (10).

2. Dispositif de becquet arrière (8) selon la revendication 1,
**caractérisé en ce que**
le second élément de déflection d'air de toit (10) peut être entraîné par le premier élément de déflection d'air de toit (9) lors du réglage de la position de base vers la position de roulage.

3. Dispositif de becquet arrière (8) selon l'une des revendications précédentes,
**caractérisé en ce que**
le dispositif de couplage (15) dépasse sous une région intérieure (16) du second élément de déflection d'air de toit (10).

4. Dispositif de becquet arrière (8) selon l'une des revendications précédentes,
**caractérisé en ce que**
le second élément de déflection d'air de toit (10) présente une extrémité avant (10a) à appliquer contre une porte arrière (7) et/ou pour former un axe de pivotement (A), un bord arrière (10b), un bord latéral extérieur (10c) et un bord latéral intérieur (10d), et
le dispositif de couplage (15) entraîne le bord intérieur (10d) et/ou une région intérieure du second élément de déflection d'air de toit (10).

5. Dispositif de becquet arrière (8) selon l'une des revendications précédentes,
**caractérisé en ce que**
le dispositif de couplage (15) entraîne le second élément de déflection d'air de toit (10) le long de l'ensemble du bord intérieur (10d) du second élément de déflection d'air de toit (10).

6. Dispositif de becquet arrière (8) selon l'une des revendications précédentes,
**caractérisé en ce que**
un dispositif de contre-couplage (17) est prévu contre le second élément de déflection d'air de toit (10) pour être engrené et entraîné par le dispositif de couplage (15).

7. Dispositif de becquet arrière (8) selon la revendication 6,
**caractérisé en ce que**
le dispositif de couplage (15) et le dispositif de contre-couplage (17) sont conçus en tant que profils coudés ou en forme de U qui lors de l'entraînement s'engrènent l'un dans l'autre, de préférence par coopération de forme.

8. Dispositif de becquet arrière (8) selon l'une des revendications précédentes,
**caractérisé en ce que**
le dispositif de réglage (13) est prévu uniquement pour régler le premier élément de déflection d'air de toit (9), et le second élément de déflection d'air de toit peut être réglé uniquement passivement via le premier élément de déflection d'air de toit (9).

9. Dispositif de becquet arrière selon l'une des revendications précédentes,
**caractérisé en ce que**
le premier élément de déflection d'air de toit (9) est l'élément de déflection d'air de toit (9) de gauche, et le second élément de déflection d'air de toit (10) est l'élément de déflection d'air de toit (10) de droite.

10. Dispositif de becquet arrière selon l'une des revendications précédentes,
**caractérisé en ce que**
le dispositif de réglage (13) est un dispositif de réglage mécanique, par exemple une barre de traction-pression, ou un dispositif de réglage pneumatique ou électrique pour régler le premier élément de déflection d'air de toit (9).

11. Dispositif de becquet arrière (8) selon l'une des revendications précédentes,
**caractérisé en ce que**
il peut être entièrement apposé contre les portes arrière (6, 7),
dans lequel le premier élément de déflection d'air de toit (9) peut être apposé contre une première porte arrière (6) et le second élément de déflection d'air de toit (10) peut être apposé contre une seconde porte arrière (7) du véhicule utilitaire (1).

12. Dispositif de becquet arrière (8) selon l'une des revendications précédentes,
**caractérisé en ce que**
les éléments de déflection d'air de toit (9, 10) peuvent être appliqués à plat contre les portes arrière (6, 7) dans la position de base.

13. Dispositif de becquet arrière (8) selon l'une des revendications précédentes,
**caractérisé en ce que**
le premier élément de déflection d'air de toit (9) et le second élément de déflection d'air de toit (10) présentent respectivement un dispositif de charnière pour être respectivement apposés contre une porte arrière (6, 7) afin de former l'axe de pivotement (A).

14. Dispositif de becquet arrière selon l'une des revendications précédentes,
**caractérisé en ce que**
les éléments de déflection d'air de toit (9, 10) sont conçus dans une matière plastique.

15. Véhicule utilitaire (1) avec un dispositif de becquet arrière (8) selon l'une des revendications précédentes,
dans lequel dans la position de base les portes arrière (6, 7) peuvent être respectivement ouvertes l'une après l'autre et pivotées d'environ 270° vers l'extérieur et vers l'avant, pour être respectivement appliquées contre une paroi latérale (4) du véhicule utilitaire (1), par entraînement du dispositif de becquet arrière (8) déplacé dans la position de base entre les portes arrière (6, 7) et les parois latérales (4).

16. Véhicule utilitaire (1) selon la revendication 15,
**caractérisé en ce que**
la seconde porte arrière (7), contre laquelle est apposé le second élément de déflection d'air de toit (10), peut être ouverte en premier, et la première porte arrière (6), contre laquelle le premier élément de déflection d'air de toit (9) est apposé, peut ensuite être ouverte.
